# EUROPÄISCHE PATENTSCHRIFT

(11) **EP 1 159 363 B1**
(45) Veröffentlichungstag und Bekanntmachung des Hinweises auf die Patenterteilung: **09.04.2003**
(21) Anmeldenummer: 00908953.3
(22) Anmeldetag: 27.01.2000
(51) Int. Cl.: C09J 5/06, B29C 65/00

(54) **VORRICHTUNG UND VERFAHREN ZUR VERKLEBUNG VON FÜGETEILEN**
DEVICE AND METHOD FOR GLUING TOGETHER PARTS TO BE JOINED
PROCEDE ET DISPOSITIF POUR COLLER DES PARTIES D'ASSEMBLAGE

(30) Priorität: 29.01.1999 DE 19904038
(43) Veröffentlichungstag der Anmeldung: 05.12.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: HAHN-JOSE, Thomas, D-66386 St. Ingbert (DE); DEGEL, Christian, D-66440 Blieskastel (DE)
(74) Vertreter: Gagel, Roland, Dr.
(86) Internationale Anmeldenummer: DE0000259
(87) Internationale Veröffentlichungsnummer: WO00045446

(56) Entgegenhaltungen:
- US-A- 4 239 575
- PATENT ABSTRACTS OF JAPAN vol. 013, no. 531 (E-851), 28. November 1989 (1989-11-28) & JP 01 216540 A (SHOWA DENKO KK;OTHERS: 01), 30. August 1989 (1989-08-30)

## Beschreibung

### Technisches Anwendungsgebiet

Die vorliegende Erfindung betrifft eine Vorrichtung sowie ein Verfahren zur Verklebung von Fügeteilen, insbesondere für die Herstellung von Bauteilen im Bereich der Ultraschalltechnik. In diesem Bereich ist eine genau definierte und dauerhafte Verbindung, beispielsweise zwischen einer Membran und einer piezokeramischen Scheibe für einen Ultraschallwandler, von großer Bedeutung. Die Klebeschicht muss hierbei gleichmäßig und ohne Lufteinschlüsse gebildet sein und zudem einen guten Übergang für akustische Wellen ermöglichen. Gerade im industriellen Bereich der Serienfertigung derartiger Ultraschallwandler werden an die Reproduzierbarkeit der Klebeverbindung hohe Anforderungen gestellt, da unterschiedliche Klebeverbindungen zu unterschiedlichen Wandlereigenschaften führen.

### Stand der Technik

Aus dem Stand der Technik sind derzeit verschiedene Techniken zur maschinellen oder maschinell unterstützten Herstellung von Klebeverbindungen zwischen Fügeteilen bekannt. So bezieht sich beispielsweise die DE 195 28 442 A1 in ihrer Einleitung auf derartige Klebetechniken. In einer Variante wird hierbei zur Vermeidung von Luftblasen zwischen den Fügeteilen vor dem Aushärten des Klebers eine Druckwalze über die bereits zusammengefügten Fügeteile bewegt. In einer anderen Variante wird ein Anpressstempel eingesetzt, um ein oberes Fügeteil gegen ein unteres Fügeteil zu pressen. Durch den dadurch ausgeübten Druck sollen Luftblasen innerhalb der Klebeverbindung zwischen beiden Fügeteilen vermieden werden.

Beide dargestellten Verfahren bzw. die zugehörigen Vorrichtungen sind jedoch insbesondere für die reproduzierbare und zuverlässige Herstellung von Klebeverbindungen im Ultraschallbereich nicht geeignet. So kann mit diesen Verfahren der Einschluss von Luftblasen in der Klebeverbindung nicht ausreichend reduziert werden. Weiterhin lässt sich mit diesen Techniken die Dicke der Klebeschicht von Verbindung zu Verbindung nicht mit ausreichender Genauigkeit reproduzieren. Lufteinschlüsse, eine ungleichmäßige Verteilung des Klebstoffes im Klebspalt und unterschiedlich dicke Klebspalte bei Serienklebungen lassen jedoch die Qualität der produzierten Klebeverbindungen stark variieren. Es ergeben sich hohe Ausschüsse bei anspruchsvollen Klebeaufgaben, wie sie sich insbesondere im Bereich der Ultraschalltechnik stellen.

Die US 4,239,575 beschreibt ein Verfahren sowie eine Vorrichtung zur Verbindung von Fügeteilen bei denen keinerlei Klebemittel zwischen die Fügeteile eingebracht werden. Die Druckschrift befasst sich mit der Technik des sogenannten "shear fusion bonding", bei der thermoplastische Elemente des gleichen Materials an ihrer Oberfläche angeschmolzen und danach unter Einbringung einer Scherspannung in die Verbindungsfläche aufeinandergedrückt werden. Die obige Problematik tritt bei dieser Verbindungstechnik nicht auf. Jedoch läßt sich mit dieser Technik nur eine ganz spezielle Auswahl an Materialien miteinander verbinden.

Die Aufgabe der vorliegenden Erfindung besteht darin, eine Vorrichtung sowie ein Verfahren zur Verklebung von Fügeteilen bereitzustellen, die eine dauerhafte und gleichmäßige Verklebung mit hoher Reproduzierbarkeit ermöglichen.

### Darstellung der Erfindung

Die Aufgabe wird mit der Vorrichtung und dem Verfahren gemäß den Ansprüchen 1 bzw. 16 gelöst. Vorteilhafte Ausgestaltungen der Vorrichtung und des Verfahrens sind Gegenstand der Unteransprüche.

Die erfindungsgemäße Vorrichtung zur Verklebung von Fügeteilen besteht aus zwei Aufnahmesystemen, von denen ein erstes Aufnahmesystem zur Fixierung eines ersten Fügeteiles und ein zweites Aufnahmesystem zur Fixierung eines zweiten Fügeteils dienen. Weiterhin ist eine erste Antriebseinrichtung zum Bewegen des ersten Aufnahmesystems gegen das zweite Aufnahmesystem vorgesehen, um zu verbindende bzw. zu verklebende Flächen des ersten und zweiten Fügeteils gegeneinander zu drükken. Die Vorrichtung umfasst eine zweite Antriebseinrichtung zur Erzeugung einer zyklischen Bewegung des ersten oder zweiten Aufnahmesystems in einer Ebene parallel zu den zu verbindenden Flächen, so dass eine Relativbewegung zwischen den zu verbindenden Flächen erreicht wird. Die zweite Antriebseinrichtung ist hierbei zur Erzeugung eines Bewegungshubs der zyklischen Bewegung zwischen 1 und 1000 µm ausgestaltet.
Mit dieser Vorrichtung wird daher eine Dynamik ermöglicht, bei der die beiden Klebeflächen während des gegeneinander Drückens eine zyklische Relativbewegung in der Verbindungsebene ausführen. Durch diese Relativbewegung zwischen den Klebeflächen wird es eventuell eingeschlossener Luft erleichtert, vor dem Aushärten des Klebers aus dem Klebespalt auszutreten. Ebenso werden Klebstoffüberschüsse über die Klebefläche verteilt oder treten seitlich aus dem Klebespalt aus. Relativbewegung wird mit einem kleinen Bewegungshub, der zwischen 1 und 1000 µm liegt, durchgeführt. Die Relativbewegung dient hierbei in erster Linie zur Vermeidung von Lufteinschlüssen und zur homogeneren Verteilung des Klebstoffes im Klebespalt. Dies führt zu einer reproduzierbareren Klebeverbindung, die insbesondere im Bereich der Serienfertigung erforderlich ist.
Der Zeitraum der Relativbewegung ist auf den verwendeten Klebstoff und die Fügeteile anzupassen und wird in der Regel nicht über den Beginn der Aushärtung des Klebstoffes fortgeführt werden.
Neben dieser Erhöhung der Qualität der Verklebung kann mit der Relativbewegung auch eine Verteilung einer anfänglich nur lokal aufgebrachten Klebstoffmasse über den zu verbindenden Fügeflächen erreicht werden. Hierbei wird die Relativbewegung allerdings im ersten Stadium des gegeneinander Drückens der beiden Fügeteile mit größerem Hub ausgeführt, als dies im nachfolgenden Stadium zur Erzielung der reproduzierbaren Klebeschicht bzw. Klebeverbindung der Fall ist.

In einer bevorzugten Ausführungsform der erfindungsgemäßen Vorrichtung ist eine Messeinrichtung zur Messung einer durch die erste Antriebseinrichtung auf das erste Fügeteil ausgeübten vertikalen Kraft und/oder eines durch das erste Aufnahmesystem zurückgelegten Weges vorgesehen. Diese vertikale Kraft ist die Kraft, mit der die beiden Fügeteile senkrecht zu ihrer zu verbindenden Fläche gegeneinander gedrückt werden. Durch die Erfassung der Kraft bzw. des Weges, über den die Antriebseinrichtung das erste Fügeteil gegen das zweite Fügeteil bewegt, lassen sich sehr vorteilhafte Klebeergebnisse erzielen. So kann einerseits die Kraft vorgegeben werden, bei der die erste Antriebseinrichtung ihre Zustellbewegung in Richtung des zweiten Fügeteils stoppt. Durch Vorgabe dieser Kraft lassen sich bei einer Serienfertigung Klebeverbindungen mit hoher Reproduzierbarkeit erzeugen. In gleicher Weise kann der Weg vorgegeben werden, über den das erste Fügeteil gegen das zweite Fügeteil bewegt wird. Durch Aufnahme bzw. Anzeige einer Kraft-Weg-Kurve lassen sich zudem die Punkte feststellen, bei denen sich die beiden Fügeflächen berühren. Dies sind die Werte, bei denen trotz einer Erhöhung der Kraft auf das erste Fügeteil keine Zustellung durch die erste Antriebseinrichtung mehr erfolgt.
Ein weiterer Vorteil der Messung der Kraft und/oder des Weges besteht darin, dass der Start und das Ende der durch die zweite Antriebseinrichtung erzeugten zyklischen Bewegung exakt vorgegeben werden können. So kann ein Kraftwert vorgegeben werden, bei dem die zyklische Bewegung gestartet wird, sowie ein weiterer (höherer) Kraftwert, bei dem diese Bewegung wieder gestoppt wird. Auch dies führt zu einer Erhöhung der Reproduzierbarkeit der Durchführung derartiger Verklebungen bei einer Serienfertigung.
Zu den genannten Zwecken ist die Vorrichtung daher vorzugsweise mit einer Steuerung ausgestattet, die die erste bzw. die zweite Antriebseinrichtung in Abhängigkeit von den vorgebbaren Kraftwerten ansteuert.

In einer weiteren Ausführungsform der erfindungsgemäßen Vorrichtung wird ebenfalls die lateral, d.h. parallel zur Verbindungsebene der beiden zu verbindenden Flächen durch die zweite Antriebseinrichtung auf die Fügeteile ausgeübte Kraft gemessen wird. Anhand dieses Kraftverlaufs lässt sich der Beginn des Aushärteprozesses des Klebstoffes feststellen, ab dem die Relativbewegung nicht mehr fortgeführt werden sollte. Durch eine entsprechende Steuerung kann daher die zweite Antriebseinrichtung zur Beendigung der Relativbewegung veranlasst werden.

Die erste Antriebseinrichtung umfasst bei der erfindungsgemäßen Vorrichtung vorzugsweise einen entlang einer Achse - senkrecht zu den zu verbindenden Flächen - verfahrbaren Druckkopf, der mit einem Linearantrieb ausgestattet ist. Das Aufnahmesystem ist hierbei vorzugsweise als Vakuumgreifer ausgeführt, mit dem das erste Fügeteil in einer festen Orientierung gehalten werden kann.

Die zweite Antriebseinrichtung ist vorzugsweise mit dem zweiten Aufnahmesystem verbunden, das beispielsweise als Arbeitsplatte ausgeführt sein kann. Ein Beispiel für eine derartige Antriebseinrichtung ist ein Exzenterantrieb. Ein weiteres Beispiel sieht eine Anordnung zweier senkrecht zueinander agierender Piezostacks vor. Es versteht sich jedoch von selbst, dass eine Vielzahl bekannter Antriebseinrichtungen zur Erzeugung einer derartigen zyklischen Bewegung eingesetzt werden können.
Die zweite Antriebseinrichtung ist so ausgeführt, dass sie einen Bewegungshub der zyklischen Bewegung zwischen 1 und 1000 µm erzeugt. Selbstverständlich ist hierbei nicht erforderlich, dass die zweite Antriebseinrichtung den gesamten Bereich von 1 bis 1000 µm überstreichen kann. Es ist vielmehr ausreichend, wenn die Antriebseinrichtung einen festen Bewegungshub von beispielsweise 100 µm, der im Bereich zwischen 1 und 1000 µm liegt, realisieren kann. Unter Bewegungshub ist hierbei die maximale Bewegungsstrecke entlang einer Achse in der Ebene parallel zu den verbindenden Flächen zu verstehen. So beträgt bei einer kreisförmigen Bewegung mit einem Radius der Kreisbahn von 50 µm der Bewegungshub 100 µm. Die Frequenz der zyklischen Bewegung, die mit der zweiten Antriebseinrichtung erzeugt werden kann, liegt vorzugsweise im Bereich von 1 bis 100 Hz. Bei dieser Frequenz handelt es sich um die Anzahl der Bewegungszyklen pro Sekunde. Ein Bewegungszyklus bedeutet hierbei eine Bewegung auf einer geschlossenen Bahn bis zum Ausgangspunkt.

Vorzugsweise sind im ersten und/oder zweiten Aufnahmesystem Heizelemente angeordnet, die die Fügeteile und damit den Kleber auf eine vorgebbare Temperatur aufheizen. Diese Aufheizung, vorzugsweise bis unterhalb des Wertes der Aushärtetemperatur, bewirkt eine verbesserte Klebeverbindung und erleichtert die Relativbewegung zwischen den Fügeteilen. Durch die bei der Temperaturerhöhung erreichte Viskositätsverringerung werden die Fließeigenschaften des Klebstoffes erhöht und ein Ausdringen eingeschlossener Luft sowie der Abbau von überschüssigem Klebstoff zusätzlich erleichtert.
Weiterhin können an der Vorrichtung UV-Lampen vorgesehen sein, die die Bestrahlung von Randbereichen der Klebeverbindung ermöglichen. Dies ist insbesondere bei Einsatz eines Klebstoffes mit mehreren Aushärtesystemen - Aushärtung durch Luftabschluss und Beleuchtung mit ultraviolettem Licht - erforderlich. Der überschüssige Klebstoff, der aus dem Klebespalt austritt und sich am Rand sammelt, wird durch die Beleuchtung mit UV-Licht ausgehärtet und führt zu einer Haftung der Fügeteile am Rand. Die anaerobe Aushärteeigenschaft hat eine Aushärtung des Klebstoffes im Klebespalt zur Folge. Der Einsatz eines derartigen Klebers in Verbindung mit der erfindungsgemäßen Vorrichtung bzw. dem zugehörigen Verfahren führt zu einer optimierten Klebung mit hoher, konstanter Qualität bei geringem Ausschuss in einer Serienfertigung.

Die Heizelemente können auch dafür eingesetzt werden, eine beschleunigte Aushärtung des Klebstoffes zu erreichen. Hierbei wird die Temperatur bis zum Erreichen der Aushärtungstemperatur angehoben. Dadurch werden verringerte Durchlaufzeiten in der Fertigung ermöglicht, die zu Kosteneinsparungen und einer kürzeren Auftragsbearbeitungszeit führen. Weiterhin erreichen viele Klebstoffe eine höhere Endfestigkeit, wenn sie unter erhöhter Temperatur aushärten. Dies bedeutet eine zusätzliche Steigerung der Qualität der Klebeverbindung.

Entsprechend den obigen Ausführungen werden beim erfindungsgemäßen Verfahren zur Verklebung von Fügeteilen, das vorzugsweise mit der Vorrichtung gemäß Anspruch 1 durchgeführt wird, zu verbindende Flächen eines ersten und eines zweiten Fügeteils nach dem Aufbringen eines Klebstoffes, beispielsweise mittels eines Dispensers, mit einer ersten Antriebseinrichtung gegeneinander gedrückt. Über einen vorgebbaren Zeitraum vor dem Beginn des Aushärteprozesses des Klebstoffes wird mit einer zweiten Antriebseinrichtung zwischen den beiden Fügeteilen eine zyklische Relativbewegung in der Verbindungsebene erzeugt.

Vorzugsweise wird die vertikale Kraft, mit der die erste Antriebseinrichtung das erste Fügeteil gegen das zweite Fügeteil drückt, und/oder die Distanz, über die die erste Antriebseinrichtung das erste Fügeteil gegen das zweite Fügeteil bewegt, ständig gemessen. Durch die Kenntnis über die momentane Kraft bzw. den momentan zurückgelegten Weg lässt sich der Klebeprozess reproduzierbar steuern. Dies wird durch die Vorgabe bestimmter Kräfte bzw. Wege erreicht, bei denen die beiden Antriebseinrichtungen ihre Bewegung beginnen oder stoppen. Soll der Klebstoff zunächst über den Fügeflächen verteilt werden, so wird die Relativbewegung bei beginnendem Kontakt des ersten oder zweiten Fügeteils mit dem auf dem gegenüberliegenden Fügeteil vorliegenden Klebstoff zunächst mit niedrigerer Frequenz und größerem Bewegungshub durchgeführt und anschließend mit höherer Frequenz und niedrigerem Bewegungshub fortgesetzt. Die Bewegung mit niedrigerer Frequenz und größerem Bewegungshub führt hierbei zunächst zur (Grob-)Verteilung des Klebstoffes über den zu verbindenden Flächen, während die anschließende Bewegung mit kleinerem Bewegungshub und höherer Frequenz die Gleichmäßigkeit bzw. Homogenität und Reproduzierbarkeit der Fügeverbindung erhöht.

Gerade im Bereich der Ultraschalltechnik, bei dem die Klebeschichten zur Verminderung von Durchgangsverlusten der Ultraschallwellen möglichst dünn ausgestaltet sein müssen, lassen sich die erfindungsgemäße Vorrichtung und das erfindungsgemäße Verfahren sehr vorteilhaft einsetzen. Die Relativbewegung der zu verbindenden Fügeflächen während des Zusammendrückens führt zu einer Minimierung der Klebspaltdicke. Im Idealfall führt der Einsatz der Vorrichtung bzw. des Verfahrens zur direkten Berührung der beiden zu verbindenden Flächen. Der Klebstoff verbleibt dabei lediglich in den durch die Mikrorauigkeit der Verbindungsflächen vorhandenen Zwischenräumen und erfüllt dort seine Haftfunktion. Zur Erhöhung der Klebestärke können die zu verbindenden Flächen hierbei auch gezielt vor dem Zusammenfügen beispielsweise mit einem Sandstrahl aufgeraut werden. Durch die Möglichkeit der Messung der Kraft bzw. des Zustellweges beim Zusammendrücken der Klebeflächen lassen sich auch sehr dünne Klebeschichten reproduzierbar erzielen.
Durch die Möglichkeit der Minimierung der Klebspaltdicke, die gegebenenfalls auch zu einem direkten Kontakt der Fügeteile führen kann, eignen sich die Vorrichtung und das Verfahren besonders für den Einsatz bei der Herstellung von Bauteilen der Ultraschalltechnik.

Die Vorrichtung und das zugehörige Verfahren werden nachfolgend anhand von Ausführungsbeispielen in Verbindung mit den Zeichnungen ohne Beschränkung des allgemeinen Erfindungsgedankens nochmals näher erläutert. Hierbei zeigen:
- Fig. 1: schematisch ein Beispiel für die erfindungsgemäße Vorrichtung mit eingesetzten Fügeteilen; und
- Fig. 2: ein Beispiel für ein erfasstes Weg-Zeit-Diagramm bei Erzeugung einer Klebeverbindung.

### Wege zur Ausführung der Erfindung

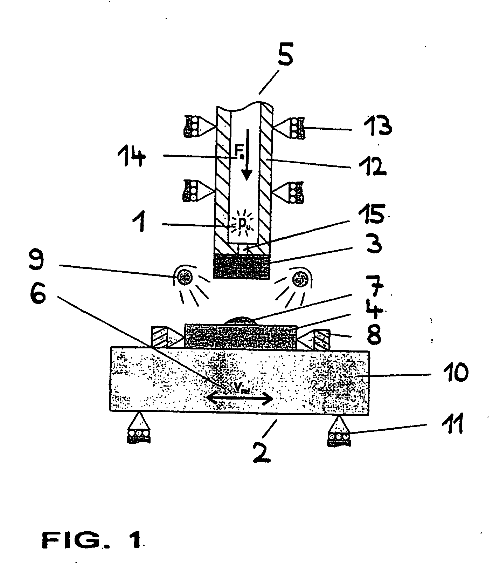

Figur 1 zeigt ein Beispiel für eine Ausführungsform der erfindungsgemäßen Vorrichtung. Hierbei werden ein Fügeoberteil 3 sowie ein Fügeunterteil 4 in entsprechenden Aufnahmesystemen 1, 2 fixiert. Das untere Aufnahmesystem 2 besteht aus einem Arbeitstisch 10 mit einer Halterung bzw. Fixierelementen 8 für das Fügeunterteil 4. Der Arbeitstisch ist auf einer Tischlagerung 11 lateral verschiebbar gelagert. Die Relativbewegung, die sowohl in einer wie auch in zwei Dimensionen in der Verbindungsebene erfolgen kann, ist durch den Pfeil angedeutet. Die erste bzw. obere Antriebseinrichtung 1 wird in diesem Beispiel durch den Anpressstempel 12 in Verbindung mit einem nicht dargestellten Antrieb gebildet. Der Anpressstempel 12 wird in einer axialen Lagerung 13 entlang einer Achse senkrecht zu den zu verbindenden Fügeflächen geführt. Die Richtung der Anpresskraft ist in der Figur schematisch durch den Pfeil 14 angedeutet. Im Anpressstempel 12 ist am unteren Ende eine Öffnung 15 vorgesehen, die als Ansaugöffnung für das Fügeoberteil 3 dient. Das Fügeoberteil 3 wird von einem Ansaugvakuum am Anpressstempel 12 gehalten, wie in der Figur 1 erkennbar. Die Reibung zwischen Fügeoberteil 3 und Anpressstempel 12 verhindert eine laterale Verschiebung des Fügeoberteiles 3. Bei ungünstigen Reibungsverhältnissen kann eine zum Fügeoberteil passende, negative Stempelgeometrie gewählt werden, die eine seitliche Verschiebung des Fügeteils verhindert. Das Fügeunterteil 4 wird auf dem Arbeitstisch 10 so befestigt, dass eine laterale Verschiebung nicht möglich ist. Der Arbeitstisch 10 ist in diesem Beispiel als Heizplatte ausgeführt. Nach dem Aufsetzen des Anpressstempels 12 und dem Erreichen eines anwendungsspezifischen Kraftniveaus setzt die Relativbewegung des Arbeitstisches 10 ein. Diese kann z. B. durch einen Exzenterantrieb erzeugt werden. Die Relativbewegung endet spätestens mit dem Einsetzen des Aushärtevorganges.

Als Kleber können aerob oder anaerob aushärtende Kleber verwendet werden. Bei Einsatz eines anaerob aushärtenden Klebers, der auch durch UV-Licht aushärtet, können die Fügeteile zusätzlich mit den in diesem Beispiel vorgesehenen UV-Lampen 9 beleuchtet werden.

Die Antriebseinrichtung zur Erzeugung der Relativbewegung des Arbeitstisches 10 erzeugt in diesem Beispiel einen Bewegungshub von 100 µm bei einer Bewegungsfrequenz von etwa 500 Zyklen/Minute (ca. 8 Hz). Die Kantenlängen des Arbeitstisches 10 betragen etwa 10 x 10 cm.
Die Vorrichtung kann einen Touch-Down-Modus aufweisen, mit dem vor dem Aufbringen des Klebers das obere Fügeteil 3 mit dem Anpressstempel 12 auf das untere Fügeteil 4 gedrückt wird, um die Endposition der Vorschubbewegung durch den Stempel 12 bzw. den Zustellweg im Vorfeld zu erfassen. Durch diese Erfassung des maximalen Zustellweges kann die Dicke der zu erzeugenden Klebeschicht sehr exakt vorgegeben werden. Besonders hilfreich ist hierbei die ständige Erfassung der Kraft bzw. des durch den Anpressstempel 12 zurückgelegten Weges.

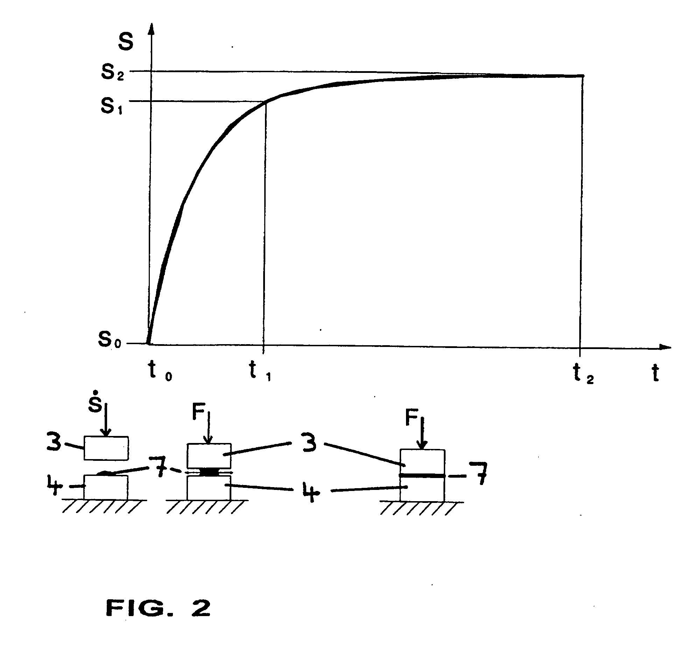

Figur 2 zeigt ein mit einer nicht dargestellten Messeinrichtung erfasstes Weg-Zeit-Diagramm, das bei der Verklebung - hier ohne Relativbewegung - einer Piezokeramik mit einer Membran aufgenommen wurde. Die verschiedenen Stufen des Klebeprozesses können diesem Diagramm sehr gut entnommen werden.

Zur Verklebung der Fügeteile 3 und 4 mit einem handelsüblichen Klebstoff 7 einer definierten Viskosität wird bei diesem Beispiel über einen bestimmten Zeitraum die konstante Kraft F über einen Anpresstempel 12 auf die Fügeteile ausgeübt. Durch einen Antrieb für den Anpresstempel werden die Fügeteile zunächst einander angenähert. Trifft das Fügeteil 3 zum Zeitpunkt t₀ beim Weg S₀ auf den Klebstoff 7, wirkt dem bewegten Fügeteil die Fluidreibung des zerfließenden Klebstoffes 7 entgegen. Die Geschwindigkeit des Fügeteiles verlangsamt sich. Ist der Spalt zwischen den Fügeteilen vollständig gefüllt (Zeitpunkt t₁; Weg S₁ ), baut sich in erster Näherung der konstante Druck p=F/A (mit A = Klebefläche) in dem Klebstoff auf. Dadurch beginnt ein Kriechprozess, bei dem der Klebstoff 7 diesem Druck ausweicht und aus dem Spalt entweicht. Mit geringer werdender Spaltgröße (größeres S) verlangsamt sich die Stempelgeschwindigkeit weiter, wie in Figur 2 zu erkennen ist. Bei Erreichen der minimalen Klebspaltgröße (Weg S₂; Zeitpunkt t₂) erfolgt keine Zustellbewegung mehr.
Durch Vorgabe bestimmter Kraftwerte oder Wege, bei denen die Zustellbewegung des Anpressstempels 12 stoppt, kann die gewünschte Klebspaltgröße exakt und reproduzierbar eingestellt werden. Das Gleiche gilt für den Start bzw. das Ende der Relativbewegung.

Aus diesem Diagramm wird ersichtlich, dass sich der Klebevorgang in unterschiedliche Phasen gliedert. Diese Phasen können durch verschiedene Bedingungen in vielerlei Hinsicht positiv beeinflusst werden. Wichtige Gesichtspunkte aus industrieller Sicht sind dabei die Qualität der Klebeverbindung und die Dauer des Klebeprozesses. Insbesondere zu große Klebspalte und ungleichmäßige Klebstoffverteilung führen zu schwer reproduzierbaren Klebeverbindungen. Hier üben die Relativbewegung zwischen den Fügeteilen und variable Anpresskräfte einen starken Einfluss aus. So erleichtern z.B. eine höhere Anpresskraft und die Relativbewegung die Kriechgeschwindigkeit des Klebstoffes aus dem Spalt und verkürzen dadurch die Prozessdauer. Ebenso kann durch den hierbei stattfindenden Spitzenabtrag der Oberfläche bei der Relativbewegung die minimale Klebespaltdicke noch weiter reduziert werden.

Weg- oder Kraft-gesteuert können die Klebeparameter, wie Anpresskraft, Anpresszeit, Relativbewegungsgeschwindigkeit, Relativbewegungsamplitude oder Relativbewegungsform, für die entsprechenden Klebephasen definiert eingestellt werden. Diese Parameter sind stark von den Werkstoffen der Fügeteile und dem verwendeten Klebstoff abhängig, so dass für jede Klebeanwendung vorab zunächst die optimalen Parameter ermittelt werden sollten.

### Bezugszeichenliste

- 1: erstes Aufnahmesystem
- 2: zweites Aufnahmesystem
- 3: erstes Fügeteil
- 4: zweites Fügeteil
- 5: erste Antriebseinrichtung
- 6: zweite Antriebseinrichtung
- 7: Klebstoff
- 8: Fixierelemente
- 9: UV-Lichtquellen
- 10: Arbeitsplatte
- 11: Tischlagerung
- 12: Anpressstempel
- 13: axiale Lagerung
- 14: Anpresskraft
- 15: Ansaugöffnung

## Patentansprüche

1. Vorrichtung zur Verklebung von Fügeteilen, mit:
- einem ersten Aufnahmesystem (1) zur Fixierung eines ersten Fügeteils (3),
- einem zweiten Aufnahmesystem (2) zur Fixierung eines zweiten Fügeteils (4),
- einer ersten Antriebseinrichtung (5) zum Bewegen des ersten Aufnahmesystems (1) gegen das zweite Aufnahmesystem (2), um zu verbindende Flächen des ersten (3) und zweiten Fügeteils (4) gegeneinander zu drücken, und
- einer zweiten Antriebseinrichtung(6) zur Erzeugung einer zyklischen Bewegung des ersten (1) oder zweiten Aufnahmesystems (2) in einer Ebene parallel zu den zu verbindenden Flächen,
**dadurch gekennzeichnet,**
**dass** die zweite Antriebseinrichtung zur Erzeugung eines Bewegungshubs der zyklischen Bewegung zwischen 1 und 1000 µm ausgestaltet ist.

2. Vorrichtung nach Anspruch 1,
**dadurch gekennzeichnet,**
**dass** sie eine Messeinrichtung zur Messung einer durch die erste Antriebseinrichtung (5) auf das erste Fügeteil (3) ausgeübten vertikalen Kraft und/oder eines durch das erste Aufnahmesystem (1) zurückgelegten Weges aufweist.

3. Vorrichtung nach einem der Ansprüche 1 oder 2,
**dadurch gekennzeichnet,**
**dass** die zweite Antriebseinrichtung (6) zur Erzeugung einer kreis- oder ellipsenförmigen Bewegung ausgestaltet ist.

4. Vorrichtung nach einem der Ansprüche 1 bis 3,
**dadurch gekennzeichnet,**
**dass** die zweite Antriebseinrichtung (6) mit dem zweiten Aufnahmesystem (2) verbunden ist.

5. Vorrichtung nach Anspruch 4,
**dadurch gekennzeichnet,**
**dass** die zweite Antriebseinrichtung (6) einen Exzenterantrieb umfasst.

6. Vorrichtung nach einem der Ansprüche 1 bis 5,
**dadurch gekennzeichnet,**
**dass** die erste Antriebseinrichtung (5) als ein entlang einer Achse verfahrbarer Anpressstempel (12) mit einem Linearantrieb ausgestaltet ist.

7. Vorrichtung nach einem der Ansprüche 1 bis 6,
**dadurch gekennzeichnet,**
**dass** das erste Aufnahmesystem (1) als Vakuumgreifer ausgestaltet ist.

8. Vorrichtung nach einem der Ansprüche 1 bis 7,
**dadurch gekennzeichnet,**
**dass** das zweite Aufnahmesystem (2) als Arbeitsplatte (10) mit Fixierelementen (8) zum Fixieren des zweiten Fügeteils (4) ausgestaltet ist.

9. Vorrichtung nach einem der Ansprüche 2 bis 8,
**dadurch gekennzeichnet,**
**dass** sie eine Steuerung aufweist, die die erste Antriebseinrichtung (5) zum Bewegen des ersten Aufnahmesystems (1) gegen das zweite Aufnahmesystem (2) ansteuert bis eine erste vorgebbare vertikale Kraft oder ein erster vorgebbarer Weg durch die Messeinrichtung erfasst werden.

10. Vorrichtung nach Anspruch 9,
**dadurch gekennzeichnet,**
**dass** die Steuerung die zweite Antriebseinrichtung (6) zur Erzeugung der zyklischen Bewegung ansteuert, sobald eine zweite vorgebbare vertikale Kraft oder ein zweiter vorgebbarer Weg durch die Messeinrichtung erfasst werden.

11. Vorrichtung nach Anspruch 9,
**dadurch gekennzeichnet,**
**dass** die Steuerung die zweite Antriebseinrichtung (6) in Abhängigkeit von der durch die Messeinrichtung erfassten vertikalen Kraft zur Erzeugung der zyklischen Bewegung mit unterschiedlicher Frequenz ansteuert.

12. Vorrichtung nach einem der Ansprüche 2 bis 11,
**dadurch gekennzeichnet,**
**dass** eine weitere Messeinrichtung zur Erfassung einer in einer Ebene parallel zu den zu verbindenden Flächen durch die zweite Antriebseinrichtung (6) auf das erste (3) oder zweite Fügeteil (4) wirkenden lateralen Kraft vorgesehen ist.

13. Vorrichtung nach Anspruch 12,
**dadurch gekennzeichnet,**
**dass** eine Steuerung zum Beenden der zyklischen Bewegung durch die zweite Antriebseinrichtung (6) vorgesehen ist, sobald die erfasste laterale Kraft einen vorgebbaren Wert erreicht.

14. Vorrichtung nach einem der Ansprüche 1 bis 13,
**dadurch gekennzeichnet,**
**dass** im ersten und/oder zweiten Aufnahmesystem (1, 2) Heizelemente angeordnet sind.

15. Vorrichtung nach einem der Ansprüche 1 bis 14,
**dadurch gekennzeichnet,**
**dass** sie UV-Lichtquellen (9) zur Bestrahlung von Randbereichen der zu verbindenden Flächen umfasst.

16. Verfahren zur Verklebung von Fügeteilen, bei dem zu verbindende Flächen eines ersten (3) und eines zweiten Fügeteils (4) nach dem Aufbringen eines Klebstoffes (7) mit einer ersten Antriebseinrichtung (5) gegeneinander gedrückt werden, wobei über einen vorgebbaren Zeitraum vor dem Beginn des Aushärteprozesses des Klebstoffes (7) mit einer zweiten Antriebseinrichtung (6) zwischen den beiden Fügeteilen (3, 4) eine zyklische Relativbewegung parallel zu den zu verbindenden Flächen mit einem Bewegungshub zwischen 1 und 1000 µm erzeugt wird.

17. Verfahren nach Anspruch 16,
**dadurch gekennzeichnet,**
**dass** eine vertikale Kraft, mit der die erste Antriebseinrichtung (5) das erste Fügeteil (3) gegen das zweite Fügeteil (4) drückt, und/oder eine Distanz, über die die erste Antriebseinrichtung (5) das erste Fügeteil (3) gegen das zweite Fügeteil (4) bewegt, gemessen werden.

18. Verfahren nach einem der Ansprüche 16 bis 17,
**dadurch gekennzeichnet,**
**dass** die Relativbewegung mit einer Frequenz zwischen 1 und 100 Hz erzeugt wird.

19. Verfahren nach einem der Ansprüche 17 bis 18,
**dadurch gekennzeichnet,**
**dass** die Relativbewegung bei Erreichen einer vorgebbaren vertikalen Kraft gestartet wird.

20. Verfahren nach einem der Ansprüche 16 bis 19,
**dadurch gekennzeichnet,**
**dass** die Relativbewegung zunächst mit niedrigerer Frequenz und größerem Bewegungshub und anschließend mit höherer Frequenz und niedrigerem Bewegungshub durchgeführt wird.

21. Verfahren nach Anspruch 20,
**dadurch gekennzeichnet,**
**dass** die Relativbewegung bei Erreichen einer ersten vertikalen Kraft oder einer ersten Distanz mit der niedrigeren Frequenz beginnt und bei Erreichen einer zweiten vertikalen Kraft oder einer zweiten Distanz mit der höheren Frequenz fortfährt.

22. Verfahren nach einem der Ansprüche 16 bis 21,
**dadurch gekennzeichnet,**
**dass** die mit der ersten Antriebseinrichtung (5) zu überbrückende Distanz zwischen den zu verbindenden Flächen über einen Touch-Down-Mechanismus vor dem Aufbringen des Klebstoffes (7) bestimmt wird.

23. Verfahren nach einem der Ansprüche 16 bis 22,
**dadurch gekennzeichnet,**
**dass** der Klebstoff (7) erwärmt wird.

24. Verfahren nach einem der Ansprüche 16 bis 23,
**dadurch gekennzeichnet,**
**dass** die zu verbindenden Flächen vor dem Verkleben aufgeraut werden.

25. Verfahren nach einem der Ansprüche 16 bis 24,
**dadurch gekennzeichnet,**
**dass** die zu verbindenden Flächen gegeneinander gedrückt werden bis sie sich berühren.

26. Verfahren nach einem der Ansprüche 16 bis 25,
**dadurch gekennzeichnet,**
**dass** eine laterale Kraft, mit der die zweite Antriebseinrichtung (6) auf das erste (3) oder zweite Fügeteil (4) einwirkt, gemessen wird.

27. Verfahren nach Anspruch 26,
**dadurch gekennzeichnet,**
**dass** die Relativbewegung gestoppt wird, sobald die laterale Kraft einen vorgebbaren Wert erreicht hat.

## Claims

1. Device for adhesively joining parts to be assembled, comprising:
- a first locator system (1) for fixing a first part to be joined (3),
- a second locator system (2) for fixing a second part to be joined (4),
- a first driving means (5) for moving said first locator system (1) relative to said second locator system (2) so as to press the surfaces of said first part to be joined (3) and said second part to be joined (4), which are to be assembled, against each other, and
- a second driving means (6) for creating a cyclic movement of said first locator system (1) or second locator system (2) in a plane parallel with said surfaces to be joined,
**characterised in**
**that** said second driving means is designed for creating a stroke of 1 to 1,000 µm in said cyclic movement.

2. Device according to Claim 1,
**characterised in**
**that** it comprises a measuring means for measuring a vertical force exerted by said first driving means (5) on said first part to be joined (3) and/or for measuring a distance covered by said first locator system (1).

3. Device according to any of the Claims 1 or 2,
**characterised in**
**that** said second driving means (6) is designed for creating movement along a circular or elliptic path.

4. Device according to any of the Claims 1 to 3,
**characterised in**
**that** said second driving means (6) is connected to said second locator system (2).

5. Device according to Claim 4,
**characterised in that** said second driving means (6) comprises an eccentric drive system.

6. Device according to any of the preceding Claims,
**characterised in**
**that** said first driving means (5) is designed as a pressing plunger (12) having a linear drive.

7. Device according to any of the Claims 1 to 6,
**characterised in**
**that** said first locator system (1) is designed as vacuum gripping means.

8. Device according to any of the Claims 1 to 6,
**characterised in**
**that** said second locator system (2) is designed as operating plate (10) with fixing elements (8) for fixing said second part to be joined (4).

9. Device according to any of the Claims 2 to 8,
**characterised in**
**that** it comprises a controller that controls said first driving means (5) for moving said first locator system (1) relative to said second locator system (2) until a first predeterminable vertical force or a first predeterminable path are detected by said measuring means.

10. Device according to Claim 9,
**characterised in**
**that** said controller controls said second driving means (6) for creating said cyclic movement as soon as a second predeterminable vertical force or a second predeterminable path are detected by said measuring means.

11. Device according to Claim 9,
**characterised in**
**that** said controller controls said second driving means (6) as a function of the vertical force detected by said measuring means for creating said cyclic movement with a different frequency.

12. Device according to any of the Claims 2 to 11,
**characterised in**
**that** a further measuring means is provided for detecting a lateral force exerted by said second driving means (6) on said first (3) or second (4) part to be joined in a plane parallel with the surfaces to be joined.

13. Device according to Claim 12,
**characterised in**
**that** a controller is provided for terminating said cyclic movement by means of said second driving means (6) as soon as the detected lateral force achieves a predeterminable value.

14. Device according to any of the Claims 1 to 13,
**characterised in**
**that** heating elements are disposed in said first and/or second locator system (1, 2).

15. Device according to any of the Claims 1 to 14,
**characterised in**
**that** it comprises sources (9) of ultraviolet light for irradiating marginal zones of the surfaces to be joined.

16. Method of adhesively bonding parts to be assembled, wherein surfaces to be joined of a first part to be joined (3) and a second part to be joined (4) are pressed by a first driving means (5) against each other after application of an adhesive (7), with a second driving means (6) being employed at a stroke between 1 and 1,000 µm to create a cyclic relative movement between said two parts to be joined in parallel with the surfaces to be bonded over a predeterminable period before the beginning of the hardening process of said adhesive (7).

17. Method according to Claim 16,
**characterised in**
**that** a vertical force, by which said first driving means (5) presses said first part to be joined (3) against said second part to be joined (4), and/or a distance over which said first driving means (5) moves said first part to be joined (3) towards said second part to be joined (4) are measured.

18. Method according to any of the Claims 16 to 17,
**characterised in**
**that** the relative movement is created at a frequency between 1 and 100 Hz.

19. Method according to any of the Claims 17 to 18,
**characterised in**
**that** the relative movement is started when a predeterminable vertical force is reached.

20. Method according to any of the Claims 16 to 19,
**characterised in**
**that** the relative movement is initially carried out at a lower frequency and at a longer stroke and subsequently at a higher frequency and a shorter stroke.

21. Method according to Claim 20,
**characterised in**
**that** the relative movement begins with said lower frequency when a first vertical force or a first distance is reached and that it continues at said higher frequency when a second vertical force or a second distance is reached.

22. Method according to any of the Claims 16 to 21,
**characterised in**
**that** the distance between the surfaces to be joined, which is to be bridged by means of said first driving means (5), is determined by a touch-down mechanism prior the application of said adhesive (7).

23. Method according to any of the Claims 16 to 22,
**characterised in**
**that** said adhesive (7) is heated.

24. Method according to any of the Claims 16 to 23,
**characterised in**
**that** the surfaces to be joined are roughened prior to adhesively joining them.

25. Method according to any of the Claims 16 to 24,
**characterised in**
**that** the surfaces to be joined are pressed against each other until they contact each other.

26. Method according to any of the Claims 16 to 25,
**characterised in**
**that** a lateral force by which said second driving means (6) acts upon said first part to be joined (3) or said second part to be joined (4) is measured.

27. Method according to Claim 26,
**characterised in**
**that** the relative movement is stopped as soon as the lateral force reaches a predeterminable value.

## Revendications

1. Dispositif à coller des pièces à joindre, comprenant:
- un premier système porte-pièce (1) à fixer une première pièce à joindre (3),
- un deuxième système porte-pièce (2) à fixer une deuxième pièce à joindre (4),
- un premier moyen d'entraînement (5) à entraîner ledit premier système porte-pièce (1) relativement audit deuxième système porte-pièce (2) de façon à presser les surfaces de ladite première pièce à joindre (3) et de ladite deuxième pièce à joindre (4), qui sont à assembler, l'un contre l'autre, et
- un deuxième moyen d'entraînement (6) à créer un mouvement cyclique dudit premier système porte-pièce (1) ou dudit deuxième système porte-pièce (2) dans un plan parallèle auxdites surfaces à joindre,
**caractérisé en ce**
**que** ledit deuxième moyen d'entraînement est conçu d'une manière à créer une course dans ledit mouvement cyclique entre 1 et 1000 µm.

2. Dispositif selon la revendication 1,
**caractérisé en ce**
**qu'**il comprend un moyen de mesure à mesurer une force verticale appliquée par ledit premier moyen d'entraînement (5) sur ladite première pièce à joindre (3) et/ou à mesurer une distance sur laquelle se déplace ledit premier système porte-pièce (1).

3. Dispositif selon une quelconque des revendications 1 ou 2,
**caractérisé en ce**
**que** ledit deuxième système d'entraînement (6) est conçu d'une manière à créer un mouvement le long une voie circulaire ou elliptique.

4. Dispositif selon une quelconque des revendications 1 à 3,
**caractérisé en ce**
**que** ledit deuxième système d'entraînement (6) est raccordé audit deuxième système porte-pièce (2).

5. Dispositif selon la revendication 4,
**caractérisé en ce**
**que** ledit deuxième système d'entraînement (6) comprend un système d'entraînement excentrique.

6. Dispositif selon une quelconque des revendications 1 à 5,
**caractérisé en ce**
**que** ledit premier système d'entraînement (5) est conçu sous forme d'une étampe de pression (12) à entraînement linéaire.

7. Dispositif selon une quelconque des revendications 1 à 6,
**caractérisé en ce**
**que** ledit premier système porte-pièce (1) est conçu sous forme d'un moyen preneur à vide.

8. Dispositif selon une quelconque des revendications 1 à 6,
**caractérisé en ce**
**que** ledit deuxième système porte-pièce (2) est conçu sous forme d'une plaque opératoire (10) aux éléments de fixage (8) à fixer ladite deuxième pièce à joindre (4).

9. Dispositif selon une quelconque des revendications 2 à 8,
**caractérisé en ce**
**qu'**il comprend une unité de réglage, qui commande ledit premier moyen d'entraînement (5) à mouvoir ledit premier système porte-pièce (1) relativement audit deuxième système porte-pièce (2) jusqu'une première force verticale prédéterminable ou une première voie prédéterminable sont détectées par ledit moyen de mesure.

10. Dispositif selon la revendication 9,
**caractérisé en ce**
**que** ladite unité de réglage commande ledit deuxième système d'entraînement (6) afin de créer ledit mouvement cyclique dès qu'une deuxième force verticale ou une deuxième voie prédéterminable sont détectées par ledit moyen de mesure.

11. Dispositif selon la revendication 9,
**caractérisé en ce**
**que** ladite unité de réglage commande ledit deuxième système d'entraînement (6) en fonction de la force verticale détectée par ledit moyen de mesure afin de créer ledit mouvement cyclique à une fréquence différente.

12. Dispositif selon une quelconque des revendications 2 à 11,
**caractérisé en ce**
**qu'**un autre moyen de mesure est disposé à détecter une force latérale appliquée par ledit deuxième système d'entraînement (6) sur ladite première (3) ou deuxième (4) pièce à joindre dans un plan parallèle aux surfaces à joindre.

13. Dispositif selon la revendication 12,
**caractérisé en ce**
**qu'**une unité de réglage est disposée à compléter ledit mouvement cyclique moyennant ledit deuxième système d'entraînement (6) dès que la force latérale détectée atteint une valeur prédéterminable.

14. Dispositif selon une quelconque des revendications 1 à 13,
**caractérisé en ce**
**que** des éléments de chauffage sont disposés dans ledit premier et/ou deuxième système porte-pièce (1, 2).

15. Dispositif selon une quelconque des revendications 1 à 14,
**caractérisé en ce**
**qu'**il comprend des sources (9) de lumière ultraviolette afin d'irradier des zones de bord des surfaces à joindre.

16. Procédé à coller des pièces à joindre, dans lequel des surfaces à joindre d'une première pièce à joindre (3) et d'une deuxième pièce à joindre (4) sont pressées par un premier moyen d'entraînement (5) l'un contre l'autre après le dépôt d'une colle (7), à un deuxième moyen d'entraînement (6) étant utilisé à
une course entre 1 et 1000 µm afin de créer un mouvement cyclique relatif entre lesdites deux pièces à joindre en parallèle aux surfaces à joindre au cours d'une période prédéterminable avant le début du processus de durcissement de ladite colle (7).

17. Procédé selon la revendication 16,
**caractérisé en ce**
**qu'**une force verticale, par laquelle ledit premier moyen d'entraînement (5) presse ladite première pièce à joindre (3) contre ladite deuxième pièce à joindre (4), et/ou une distance, sur laquelle ledit premier moyen d'entraînement (5) déplace ladite première pièce à joindre (3) vers ladite deuxième pièce à joindre (4), sont mesurées.

18. Procédé selon une quelconque des revendications 16 à 17,
**caractérisé en ce que** le mouvement relatif est créé à une fréquence entre 1 et 100 Hz.

19. Procédé selon une quelconque des revendications 17 à 18,
**caractérisé en ce**
**que** le mouvement relatif commence, quand une force verticale prédéterminable est atteinte.

20. Procédé selon une quelconque des revendications 16 à 19,
**caractérisé en ce**
**que** le mouvement relatif est d'abord réalisé à une plus basse fréquence et à une course plus longue, et ensuite à une plus haute fréquence et à une course réduite.

21. Procédé selon la revendication 20,
**caractérisé en ce**
**que** le mouvement relatif commence à ladite plus basse fréquence, quand une première force verticale ou une première distance est atteinte, et en ce qu'il continue à ladite plus haute fréquence, quand deuxième force verticale ou une deuxième distance est atteinte.

22. Procédé selon une quelconque des revendications 16 à 21,
**caractérisé en ce**
**que** la distance entre les surfaces à joindre, qui doit être recouvrir moyennant ledit premier moyen d'entraînement (5), est déterminé par un mécanisme à d'impact avant le dépôt de ladite colle (7).

23. Procédé selon une quelconque des revendications 16 à 22,
**caractérisé en ce**
**que** ladite colle (7) est chauffée.

24. Procédé selon une quelconque des revendications 16 à 23,
**caractérisé en ce que** les surfaces à joindre sont rendues rugueuses avant leur collage.

25. Procédé selon une quelconque des revendications 16 à 24,
**caractérisé en ce**
**que** les surfaces à joindre sont pressées l'une contre l'autre jusqu'à ce qu'elles entrent en contact mutuel.

26. Procédé selon une quelconque des revendications 16 à 25,
**caractérisé en ce**
**qu'**une force latérale, par laquelle ledit deuxième système d'entraînement (6) agit sur ladite première pièce à joindre (3) ou ladite deuxième pièce à joindre (4), est mesurée.

27. Procédé selon la revendication 26,
**caractérisé en ce**
**que** le mouvement relatif est arrêté, dès que la force latérale atteint une valeur prédéterminable.
